# EUROPEAN PATENT APPLICATION

(11) **EP 3 589 024 A1**
(43) Date of publication of application: **01.01.2020**
(21) Application number: 17902970.7
(22) Date of filing: 29.03.2017
(51) Int. Cl.: H04W 48/08

(54) **METHOD AND APPARATUS FOR PROCESSING MESSAGE**

(71) Applicant: Huawei Technologies Co., Ltd., Longgang Shenzhen, Guangdong 518129 (CN)
(72) Inventor: NI, Hui, Shenzhen Guangdong 518129 (CN); LI, Yongcui, Shenzhen Guangdong 518129 (CN); GAO, Xiaofeng, Shenzhen Guangdong 518129 (CN)
(74) Representative: Maiwald Patent- und Rechtsanwaltsgesellschaft mbH
(86) International application number: PCT/CN2017/078608
(87) International publication number: WO 2018/176272

(57) **Abstract**

Embodiments of this application provide a packet processing method and apparatus, to help reduce control signaling overheads and storage overheads. The method includes: receiving, by a forwarding device, a first rule from a service function chain controller, where the first rule includes a match field, and the match field is a network service header NSH; receiving, by the forwarding device, a first service flow packet, and matching a packet header feature of the first service flow packet with the match field of the first rule; and if the packet header feature of the first service flow packet successfully matches the match field of the first rule, creating, by the forwarding device, a second rule and a third rule according to the first rule, where priorities of the second rule and the third rule are higher than a priority of the first rule.

## Description

### TECHNICAL FIELD

This application relates to the communications field, and more specifically, to a packet processing method and apparatus.

### BACKGROUND

A service function chain (Service Function Chain, SFC) is a network technology that is currently researched and standardized. A network service header (Network Service Header, NSH) is an application protocol for implementing the SFC. The NSH is used to describe network service information carried by a data plane header along a service path (Service Path, SP), to implement a "service plane" (Service Plane) independent of transmission.

However, most of current service function (Service Function, SF) devices do not support an NSH protocol; therefore, a service function chain proxy (Service Function Chain Proxy, SP) device needs to be deployed to support the NSH protocol. In this case, a packet returned by the SF device and received by the SP device is a protocol layer packet without an NSH, for example, a network layer packet, a transport layer packet, or an application layer packet. The SP device needs to match with a protocol layer packet header feature to restore an NSH header, and forwards a processed protocol layer packet to a service function forwarder (Service Function Forwarder, SFF). Because a protocol layer packet header feature on a same service chain dynamically changes, the SP device needs to report to an SFC controller each time after receiving a service flow packet from the SF device, to obtain a forwarding rule for restoring the NSH. This results in a lot of signaling overheads between the SFC controller and the SP device, and cannot meet a requirement for real-time processing of a packet.

### SUMMARY

Embodiments of this application provide a packet processing method and apparatus, to help reduce control signaling overheads.

According to a first aspect, a packet processing method is provided. The method includes: receiving, by a forwarding device, a first rule from a service function chain controller, where the first rule includes a match field, and the match field is a network service header NSH; receiving, by the forwarding device, a first service flow packet, and matching a packet header feature of the first service flow packet with the match field of the first rule; and if the packet header feature of the first service flow packet successfully matches the match field of the first rule, creating, by the forwarding device, a second rule and a third rule according to the first rule, where priorities of the second rule and the third rule are higher than a priority of the first rule.

It should be understood that, the rule mentioned in this embodiment of this application may be a specific rule or a type of rules. For example, the first rule may include a plurality of specific rules. For example, the plurality of specific rules may include a specific rule 1 and a specific rule 2. A match field corresponding to the specific rule 1 is that an SPI=1 and an SI=2, and a match field corresponding to the specific rule 2 is that an SPI=2 and an SI=3. Optionally, the first rule may further include more specific rules, and the same is true for the second rule and the third rule.

Optionally, the forwarding device is an SFF or an SP device, the forwarding device has a capability of creating a rule, and the forwarding device may create the second rule and the third rule according to the first rule delivered by the SFC controller, to process a service flow packet from the SFF, an SF device, or a classifier according to the second rule and the third rule, without obtaining a corresponding rule by reporting to the SFC controller each time, and then the packet is processed according to a rule delivered by the SFC controller. Therefore, it helps reduce control signaling overheads. On the other hand, a large quantity of forwarding rules do not need to be stored in the forwarding device, thereby reducing storage overheads of the forwarding device.

Optionally, in some embodiments, the match field of the first rule further includes a protocol layer header feature.

Optionally, in some embodiments, a match field of the second rule is an NSH, and the method further includes: receiving, by the forwarding device, a second service flow packet from a service function forwarder SFF or a classifier; matching a packet header feature of the second service flow packet with the match field of the second rule, where the packet header feature of the second service flow packet includes an NSH; and if the packet header feature of the second service flow packet successfully matches the match field of the second rule, performing actions in the second rule: removing the NSH from the second service flow packet, and forwarding a processed second service flow packet to a service function SF device.

Because a packet from the classifier or the SFF is a service flow packet including an NSH, and the match field of the second rule is the NSH, the forwarding device may process the packet from the SFF or the classifier according to the second rule.

Optionally, in some embodiments, the match field of the second rule further includes a protocol layer header feature.

Optionally, in some embodiments, a match field of the third rule is a packet header feature, and the method further includes:
receiving, by the forwarding device, a third service flow packet from the SF device;
matching a packet header feature of the third service flow packet with the match field of the third rule; and
if the packet header feature of the third service flow packet successfully matches the match field of the third rule, performing an action in the third rule: adding an NSH to the third service flow packet.

Because a packet from the SF device is a protocol layer packet not including an NSH, and the match field of the third rule is a protocol layer header feature, the forwarding device may process the packet from the SF device according to the third rule.

Optionally, in some embodiments, the forwarding device is the SFF, and the method further includes:
processing the third service flow packet to which the NSH has already been added.

Optionally, in some embodiments, the forwarding device is an SP device, and the method further includes:
forwarding, to the SFF, the third service flow packet to which the NSH has already been added.

Optionally, in some embodiments, the first service flow packet, the second service flow packet, and the third service flow packet belong to a same service flow.

According to a second aspect, a packet processing apparatus is provided. The apparatus includes units configured to perform the method according to the first aspect or the implementations of the first aspect.

According to a third aspect, a packet processing apparatus is provided. The apparatus includes a processor, a memory, a first network interface, a second network interface, and a third network interface. The first network interface, the second network interface, the third network interface, the processor, and the memory communicate with and are connected to each other; the memory is configured to store a program; the processor is configured to execute the program; and when the program is executed, the processor performs the method according to the first aspect based on the first network interface, the second network interface, and the third network interface.

According to a fourth aspect, a packet processing system is provided. The system includes the data packet processing apparatus according to the second aspect and a control device, where the control device is configured to deliver a first rule to the packet processing apparatus, where a match field of the first rule is a network service header NSH.

According to a fifth aspect, a computer-readable medium is provided. The computer-readable medium stores program code to be executed by a computer, and the program code includes an instruction used to perform the method according to the first aspect.

According to a sixth aspect, a computer program product is provided. The computer program product includes program code executable by a computer, and the program code includes an instruction used to perform the method according to the first aspect.

Based on the foregoing technical solutions, according to the packet processing method in the embodiments of this application, the forwarding device may generate the second rule and the third rule with higher priorities according to the first rule delivered by the service function chain SFC controller, to process the service flow packet from the classifier, the SFF, or the SF device according to the second rule and the third rule. Therefore, the forwarding device does not need to obtain, by reporting to the SFC controller, a rule for restoring the NSH, thereby helping reduce control signaling overheads.

### BRIEF DESCRIPTION OF DRAWINGS

FIG. 1 is a schematic diagram of an example of a network architecture applicable to an embodiment of this application;
FIG. 2 is a schematic flowchart of a packet processing method according to an embodiment of this application;
FIG. 3 is a schematic flowchart of a packet processing method according to an embodiment of this application when a forwarding device is an SP device;
FIG. 4 is a flowchart of an example of a packet processing method according to an embodiment of this application when a forwarding device is an SP device;
FIG. 5 is a schematic flowchart of a packet processing method according to an embodiment of this application when a forwarding device is an SFF device;
FIG. 6 is a flowchart of an example of a packet processing method according to an embodiment of this application when a forwarding device is an SFF device;
FIG. 7 is a schematic block diagram of a data packet processing apparatus according to an embodiment of this application;
FIG. 8 is a schematic structural diagram of a hardware implementation of a data packet processing apparatus according to an embodiment of this application; and
FIG. 9 is a schematic block diagram of a data packet processing system according to an embodiment of this application.

### DESCRIPTION OF EMBODIMENTS

The following describes the technical solutions in the embodiments of this application with reference to the accompanying drawings.

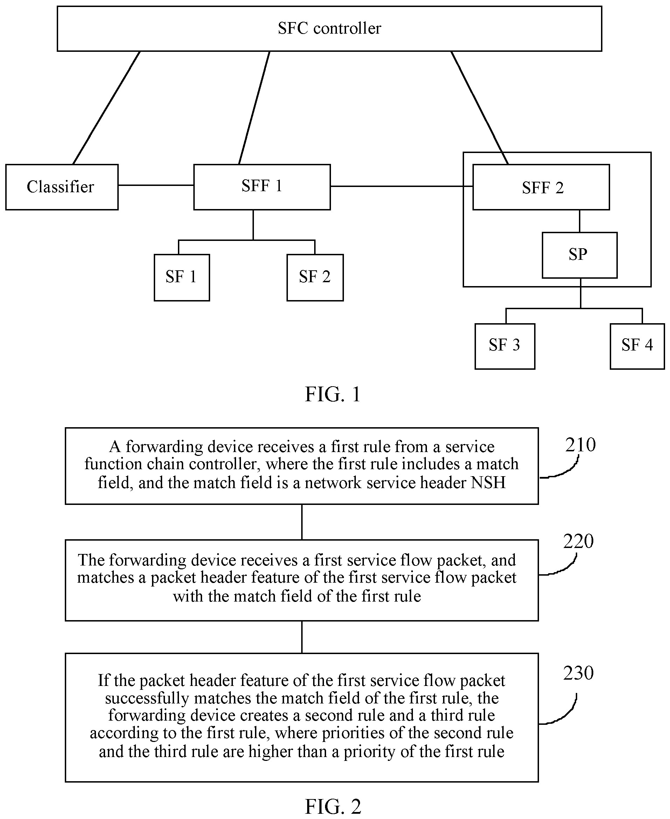

FIG. 1 is a schematic diagram of a network architecture applicable to an embodiment of this application. It should be understood that, the network architecture shown in FIG. 1 is merely intended to help a person skilled in the art better understand this embodiment of this application rather than limit the scope of this embodiment of this application.

As shown in FIG. 1, the network architecture includes:
an SFC controller, configured to: construct a service function path (Service Function Path, SFP), and deliver path information to a node (such as a classifier or an SFF) on the service function path, where for example, the path information includes a classification rule or a forwarding rule;
a classifier (classifier), configured to: classify a service flow according to a classification rule, and transfer the service flow to a corresponding service function path for processing;
an SFF, configured to forward a service flow packet according to a forwarding rule, where the SFF may be a physical or virtual forwarding device such as a router or a switch;
an SP device, configured to support an SFC when an SF device does not support the SFC; and
the SF device, configured to perform a service function of value-added service processing on a service flow, where the SF device may be a virtual element or a functional entity embedded in a physical network device, for example, a firewall (Firewall), deep packet inspection (Deep Packet Inspection, DPI), network address translation (Network Address Translation, NAT), or load balance (Load Balance, LB).

For example, a process of processing a service flow packet is as follows: The SFC controller constructs a service function path, where the service function path is an ordered set of a series of service functions. The service flow packet is classified by the classifier and then forwarded by the SFF, and SF devices in the SFP are sequentially traversed, to process the service flow packet. Specifically, an SFP may be indicated by using a service path identifier (Service Path Identifier, SPI), and a processing position of the service flow packet may be indicated by using a service index (Service Index, SI). For example, one SFP is: firewall->DPI->QoS, where an SPI is 1, and an initial value of an SI is 3. When the service flow packet is completely processed at the firewall, the SI changes to 2, and the rest may be reduced by analogy. After the packet is completely processed at the QoS, the SI changes to 0, and the service flow packet is completely processed.

Because most SF devices do not support an NSH, an SP device needs to be deployed to remove an NSH header from a service flow packet sent to the SF device, and add an NSH header to a service flow packet from the SF device. A service flow packet received by the SP device from the SF device is a protocol layer packet without an NSH, for example, a network layer (or L3) packet, a transport layer (or L4) packet, or an application layer (or L7) packet. The SP device matches a protocol layer packet header feature (or a protocol layer header feature) with a forwarding rule of the SP device, to restore the NSH packet header, and forwards a processed service flow packet to the SFF. Because a protocol layer header feature on a same service function path dynamically changes, a forwarding rule on the SP device needs to cover all cases of the protocol layer header feature, and consequently, the SP device needs to report to the SFC controller each time after receiving a service flow packet from the SF device, to obtain a forwarding rule for restoring the NSH. This results in a lot of signaling overheads between the SFC controller and the SP device, and cannot meet a requirement for real-time processing of a packet.

In view of this, embodiments of this application provide a packet processing method. A forwarding device may generate a second rule and a third rule with higher priorities according to a first rule delivered by an SFC controller, and the forwarding device may process a service flow packet from a classifier, an SFF, or an SF device according to the second rule and the third rule. Therefore, the forwarding device does not need to obtain, by reporting to the SFC controller, a rule for restoring the NSH, thereby helping reduce control signaling overheads.

It should be understood that, in the embodiments of this application, the forwarding device has a capability of creating a rule, and the forwarding device may be an SP device, or the forwarding device may be an SFF. The SFF in this case is equivalent to a combination of the SFF and the SP device. For example, if an actual scenario is a right half part shown in FIG. 1, to be specific, includes an SP device and an SFF 2, the forwarding device may be an SP device, the SP device has a capability of creating a rule, and the SFF device 2 does not have a capability of creating a rule. Alternatively, if an actual scenario is a left half part in FIG. 1, to be specific, includes only an SFF 1, the forwarding device may be an SFF device 1, the SFF device 1 has a capability of creating a rule, and in this case, a function of the SFF device 1 is equivalent to a set of functions of an SFF device 2 and an SP device. Alternatively, an actual scenario includes a plurality of SFFs, some of the plurality of SFFs may have a capability of creating a rule, and the other SFFs do not have a capability of creating a rule, for example, an SFF device 1 has a capability of creating a rule, and an SFF device 2 does not have a capability of creating a rule.

FIG. 2 is a schematic flowchart of a packet processing method according to an embodiment of this application. A method 200 in FIG. 2 may be performed by a forwarding device, for example, an SFF or an SP device. As shown in FIG. 2, the method includes the following steps:
210: The forwarding device receives a first rule from a service function chain controller, where the first rule includes a match field, and the match field is a network service header NSH.
220: The forwarding device receives a first service flow packet, and matches a packet header feature of the first service flow packet with the match field of the first rule.
230: If the packet header feature of the first service flow packet successfully matches the match field of the first rule, the forwarding device creates a second rule and a third rule according to the first rule, where priorities of the second rule and the third rule are higher than a priority of the first rule.

Specifically, the SFC controller first constructs a service function path, and sends a corresponding rule to a network element on the service function path. For the forwarding device, the SFC controller sends the first rule to the forwarding device, where the match field of the first rule is the NSH. Optionally, the match field of the first rule may further include a protocol layer header feature. The forwarding device may receive a first service flow packet from a classifier or an SFF, the first service flow packet belongs to a service flow, the service function path is used to indicate a forwarding path of the service flow, and the first service flow packet is a service flow packet at a processing position of the service flow on the service function path.

After receiving the first service flow packet, the forwarding device may match the packet header feature of the first service flow packet with the match field of the first rule. If the packet header feature of the first service flow packet successfully matches the match field of the first rule, the forwarding device performs actions: creating the second rule and the third rule, and transferring the first service flow packet to the second rule or the third rule for processing, where priorities of the second rule and the third rule are higher than a priority of the first rule, and the second rule and the third rule are used to: when the forwarding device receives a service flow packet subsequently, preferentially process the service flow packet according to the second rule or the third rule.

For example, because the priorities of the second rule and the third rule are higher than the priority of the first rule, the forwarding device may first match the packet header feature of the second service flow packet with a match field of the second rule, and if the packet header feature of the second service flow packet successfully matches the match field of the second rule, process the second service flow packet according to an action in the second rule, or if the packet header feature of the second service flow packet fails to match the match field of the second rule, match the packet header feature of the second service flow packet with a match field of the third rule, and if the packet header feature of the second service flow packet successfully matches the match field of the third rule, process the second service flow packet according to an action in the third rule.

Alternatively, the forwarding device may first match the packet header feature of the second service flow packet with a match field of the third rule, and then match the packet header feature of the second service flow packet with a match field of the second rule. A rule that is in the second rule and the third rule and whose match field is first used by the forwarding device to match with the packet header feature of the second service flow packet is not limited in this embodiment of this application.

Optionally, if the packet header feature of the second service flow packet fails to match both the match fields of the second rule and the third rule, the forwarding device may continue to match with another rule in the forwarding device, and if the packet header feature of the second service flow packet successfully matches a match field of a rule, performs an action in the rule. For example, if the packet header feature of the second service flow packet fails to match both the match fields of the second rule and the third rule, the forwarding device continues to match with a match field of another rule in the forwarding device, and if the packet header feature of the second service flow packet successfully matches the match field of the first rule, performs an action in the first rule. If the packet header feature of the second service flow packet fails to match a match field of each rule in the forwarding device, the forwarding device may discard the second service flow packet, or may forward the second service flow packet to the SFC controller, and the SFC controller determines how to process the second service flow packet.

Optionally, the forwarding device may further determine, based on a header feature of the service flow packet, whether to match with the second rule or the third rule. For example, if the service flow packet is a packet with an NSH, the forwarding device determines to match with the second rule, or when the service flow packet is an L3/L4/L7 packet, determines to match with the third rule. For example, the forwarding device receives the second service flow packet. If the second service flow packet is a packet with an NSH, the forwarding device matches the packet header feature of the second service flow packet with the match field of the second rule, and if the packet header feature of the second service flow packet successfully matches the match field of the second rule, processes the second service flow packet according to the action in the second rule. If the packet header feature of the second service flow packet fails to match the match field of the second rule, the forwarding device discards the second service flow packet or reports to the SFC controller. For another example, the forwarding device receives the second service flow packet. If the second service flow packet is a protocol layer packet, the forwarding device matches the packet header feature of the second service flow packet with the match field of the third rule, and if the packet header feature of the second service flow packet successfully matches the match field of the third rule, processes the second service flow packet according to the action in the third rule. If the packet header feature of the second service flow packet fails to match the match field of the third rule, the forwarding device discards the second service flow packet or reports to the SFC controller.

It should be noted that, the rule mentioned in this embodiment of this application may be a specific rule or a type of rules. For example, the first rule may include a plurality of specific rules. For example, the plurality of specific rules may include a specific rule 1 and a specific rule 2. A match field corresponding to the specific rule 1 is that an SPI=1 and an SI=2, and a match field corresponding to the specific rule 2 is that an SPI=2 and an SI=3. When a packet header feature of a service flow packet successfully matches any one of the plurality of specific rules included in the first rule, it may be considered that the packet header feature of the service flow packet successfully matches the match field of the first rule. Optionally, the first rule may further include more specific rules, and the same is true for the second rule and the third rule. Details are not described herein again.

Optionally, if the packet header feature of the first service flow packet successfully matches the match field of the first rule, the forwarding device may further determine a processing position of the first service flow packet on the service function path. For example, the processing position of the first service flow packet on the service function path may be determined based on an SI. If the SI is not zero, it may be determined that the processing position of the service flow packet is not an end position, and the forwarding device may create the second rule and the third rule. If the SI is zero, to be specific, a current processing position is an end position on the service function path, the forwarding device may remove the NSH from the first service flow packet, and forward, to a network, the first service flow packet from which the NSH is removed.

To be specific, the second rule and the third rule are created if the packet header feature of the service flow packet successfully matches the match field of the first rule, and the processing position of the service flow packet is not the end position. If the packet header feature of the service flow packet successfully matches the match field of the first rule, but the processing position of the service flow packet is the end position, the forwarding device directly removes the NSH from the service flow packet, and forwards, to the network, the service flow packet from which the NSH is removed.

How the forwarding device processes the service flow packet according to the second rule and the third rule is described in detail below.

Optionally, in some embodiments, a match field of the second rule is an NSH, and the method further includes:
receiving, by the forwarding device, a second service flow packet from a service function forwarder SFF or a classifier;
matching a packet header feature of the second service flow packet with the match field of the second rule, where the packet header feature of the second service flow packet includes an NSH; and
if the packet header feature of the second service flow packet successfully matches the match field of the second rule, performing actions in the second rule: removing the NSH from the second service flow packet, and forwarding a processed second service flow packet to a service function SF device.

Specifically, the forwarding device may receive the second service flow packet from the classifier. In this case, the second service flow packet may be the first service flow packet. Alternatively, the forwarding device may receive a service flow packet from the SFF. For example, if the forwarding device is an SFF device 1, the second service flow packet may be a service flow packet from an SFF device 2. To be specific, the second rule may be used to process a packet from the SFF or the classifier.

The match field of the second rule is the NSH. Optionally, the match field of the second rule further includes a protocol layer header feature. For example, the protocol layer header feature includes a network layer header feature, a transport layer header feature, or an application layer header feature. The network layer header feature includes a source Internet protocol (Internet Protocol, IP) address, a destination IP address, or a network layer port number. The transport layer header feature includes a transport layer port number or a tunnel endpoint identifier (Tunnelling Endpoint IDentifier, TEID). The application layer header feature includes a packet type.

When the forwarding device receives the second service flow packet from the SFF or the classifier, the forwarding device may match the packet header feature of the second service flow packet with the match field of the second rule, and if the packet header feature of the second service flow packet successfully matches the match field of the second rule, the forwarding device performs the actions in the second rule: removing the NSH from the second service flow packet, and forwarding the processed second service flow packet to the SF device, where the SF device is a next SF device on the service function path.

Optionally, in some embodiments, a match field of the third rule is a protocol layer header feature, and the method further includes:
receiving, by the forwarding device, a third service flow packet from the SF device;
matching a packet header feature of the third service flow packet with the match field of the third rule; and
if the packet header feature of the third service flow packet successfully matches the match field of the third rule, performing an action in the third rule: adding an NSH to the third service flow packet.

Specifically, the match field of the third rule is the protocol layer header feature. For example, the protocol layer header feature includes a network layer header feature, a transport layer header feature, or an application layer header feature. The network layer header feature includes a source IP address, a destination IP address, or a network layer port number. The transport layer header feature includes a transport layer port number or a tunnel endpoint identifier TEID. The application layer header feature includes a packet type.

If the forwarding device receives the third service flow packet from the SF device, and the third service flow packet from the SF device is a protocol layer packet. Therefore, the packet header feature of the third service flow packet is the protocol layer header feature, the forwarding device may match the packet header feature of the third service flow packet with the match field of the third rule. If the packet header feature of the third service flow packet successfully matches the match field of the third rule, the forwarding device performs actions in the third rule: adding the NSH header to the third service flow packet, setting an NSH header field, and sending a processed third service flow packet to a next hop. The NSH header field includes an SPI and an SI, and the next hop may be an SFF, or may be another rule. When the next hop is the SFF, an address of the SFF may be indicated by a MAC address or an IP address of the SFF. This is not limited in this embodiment of this application. The MAC address is used as an example in the following embodiment for description.

Optionally, if the forwarding device is the SFF, the forwarding device transfers, to a fourth rule, the third service flow packet to which the NSH is added for processing, and the match field of the fourth rule is an NSH header feature, and includes an SPI and an SI. When the SI is 0, it indicates that a service function path corresponding to the SPI has already been processed completely; otherwise, it indicates that a service function path corresponding to the SPI is not processed completely. If the SI in the NSH is not zero, an action in the fourth rule is specifically: sending, by the forwarding device to a next hop, the third service flow packet to which the NSH is added. The next hop is another rule in the forwarding device. For example, the next hop may be the first rule. If the SI in the NSH is zero, an action in the fourth rule is specifically: removing, by the forwarding device, the NSH from the third service flow packet to which the NSH is added, and forwarding, to the network, the third service flow packet from which the NSH is removed.

Optionally, the forwarding device may be the SP device, the forwarding device forwards, to the SFF, the third service flow packet to which the NSH has already been added, and the SFF processes the third service flow packet to which the NSH is added. Specifically, the SFF may process the third service flow packet according to the fourth rule. For brevity, details are not described herein again.

It should be understood that, in this embodiment of this application, the first service flow packet, the second service flow packet, and the third service flow packet belong to a same service flow.

It should be noted that, the specific rule in this embodiment of this application may be implemented by a flow entry in an OpenFlow protocol. In subsequent embodiments, a specific rule is identified by using a flow entry in the OpenFlow protocol.

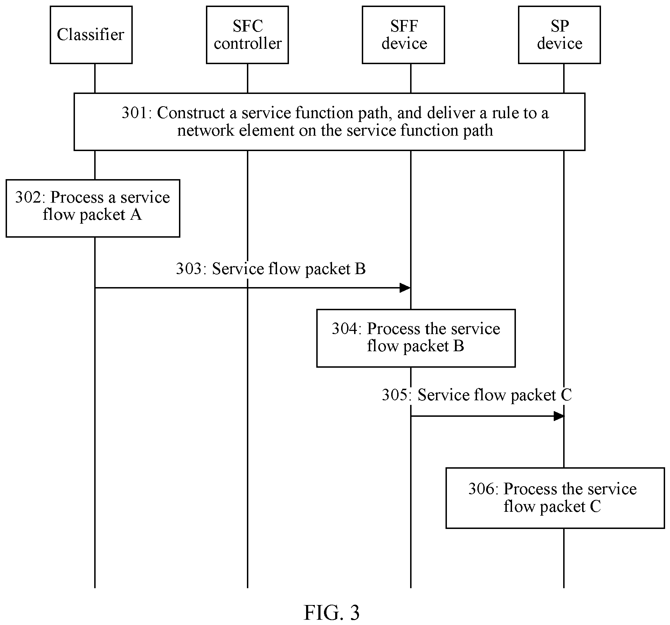

The packet processing method according to this embodiment of this application when the forwarding device is the SP device or the SFF is described below with reference to FIG. 3 to FIG. 6

FIG. 3 is a schematic flowchart of a packet processing method according to an embodiment of this application when a forwarding device is an SP device. As shown in FIG. 3, the method includes the following steps.

301: An SFC controller constructs a service function path, and sends a corresponding rule to a network element on the service function path.

Specifically, the SFC controller may deliver a rule 0 to a classifier. A match field of the rule 0 is a protocol layer header feature, for example, an L3/L4/L7 feature. After receiving a service flow packet, the classifier matches a packet header feature of the service flow packet with a match field of the rule 0. If the packet header feature of the service flow packet successfully matches the match field of the rule 0, the classifier performs actions: adding an NSH to the service flow packet, setting an SPI and an SI in the NSH, and forwarding, to a next hop, the service flow packet to which the NSH is added. The next hop is an SFF, and an address of the SFF may be indicated by a media access control (Media Access Control, MAC) address of the SFF, or may be indicated by an IP address of the SFF.

It should be noted that, the rule 0 in the classifier may be delivered by the SFC controller, or may be implemented in the following manner: DPI is deployed before the classifier or in the middle of the classifier. The classifier may obtain the rule 0 based on an inspection result of performing deep inspection on the service flow packet based on the DPI. In this case, the classifier may also classify the packet header feature of the service flow packet based on the protocol layer header feature (for example, the L3/L4/L7 feature).

302: The classifier may process a service flow packet A according to the rule 0.

Specifically, the match field of the rule 0 is the protocol layer header feature. The classifier may match a packet header feature of the received service flow packet A with the match field of the rule 0. If the packet header feature of the service flow packet A successfully matches the match field of the rule 0, the classifier performs actions in the rule 0: adding an NSH to the service flow packet A, setting an SPI and an SI in the NSH, and sending, to a next hop, the service flow packet to which the NSH is added. In this embodiment, the service flow packet to which the NSH is added is denoted as a service flow packet B. A next hop of the service flow packet B is an SFF, and an address of the SFF may be indicated by a MAC address or an IP address of the SFF.

303: The classifier sends the service flow packet B to the SFF.

304: The SFF receives the service flow packet B, and processes the service flow packet B.

For the SFF, the rule delivered by the SFC controller in 301 to the SFF is a rule 1, a match field of the rule 1 is an NSH, and when the SFF receives the service flow packet B, the SFF processes the service flow packet B according to the rule 1. Specifically, a packet header feature of the service flow packet B is matched with the match field of the rule 1. If a specific rule with an SI being zero is matched, the NSH is removed from the service flow packet and the service flow packet B from which the NSH is removed is forwarded to a network. If a specific rule with an SI not being zero is matched, the service flow packet B is sent to a next hop. In the example in FIG. 3, the next hop of the service flow packet B is an SP device, and an address of the SP device may be indicated by a MAC address of the SP device, or may be indicated by an IP address of the SP device. This is not limited in this embodiment of this application, and only the MAC address of the SP device is used for description.

It should be noted that, the rule 1 herein indicates a type of rules, and includes a plurality of specific rules, for example, may include two specific rules that are respectively a specific rule corresponding to an SI being not equal to 0 and a specific rule corresponding to an SI=0. Regardless of whether the packet header feature of the service flow packet successfully matches which one of the two specific rules, it may be considered that the packet header feature of the service flow packet successfully matches the rule 1.

In this embodiment, the service flow packet B processed in step 303 is referred to as a service flow packet C.

305: The SFF sends the service flow packet C to the SP device.

306: The SP device receives the service flow packet C, and processes the service flow packet C.

For the SP device, the rule delivered by the SFC controller in 301 to the SP device is a rule 2, and a match field of the rule 2 is an NSH. When receiving the service flow packet C, the SP device matches a packet header feature of the service flow packet C with the match field of the rule 2, and if the packet header feature of the service flow packet C successfully matches the match field of the rule 2, creates a rule 3 and rule 4, and transfers the service flow packet C to the rule 3 or the rule 4 for processing, where priorities of the rule 3 and the rule 4 are higher than a priority of the rule 2.

Specifically, a match field of the rule 3 is an NSH. If the packet header feature of the service flow packet C successfully matches the match field of the rule 3, actions in the rule 3 are performed: removing the NSH, and forwarding the service flow packet C to a next hop. The next hop of the service flow packet C is an SF device, and may be indicated by a MAC address or an IP address of the SF device. A match field of the rule 4 is a protocol layer header feature. If the packet header feature of the service flow packet C successfully matches the match field of the rule 4, actions in the rule 4 are performed: adding an NSH to the service flow packet C, setting an SPI and an SI in the NSH, and forwarding, to the SFF, the service flow packet C to which the NSH is added.

A process of processing the service flow packet is described below with reference to a specific example. A service function path of the service flow packet A is: firewall->LB, to be specific, from a firewall device to a load balance device. An SPI of the service function path is 1, a service index SI is 2, an L3 feature of the service flow packet A is that a source IP is 1.1.1.2, a destination IP is 3.1.1.2, a source port number is 3, a destination port number is 6, and the service flow packet is an L3 packet.

In this example, the SP device may be the SP device in the network architecture shown in FIG. 1, the SFF may be the SFF 2 in the network architecture shown in FIG. 1, and the firewall device and the load balance device each may be the SF 3 or the SF 4 in the network architecture shown in FIG. 1. An example in which the SF 3 is the firewall device and the SF 4 is the load balance device is used for description.

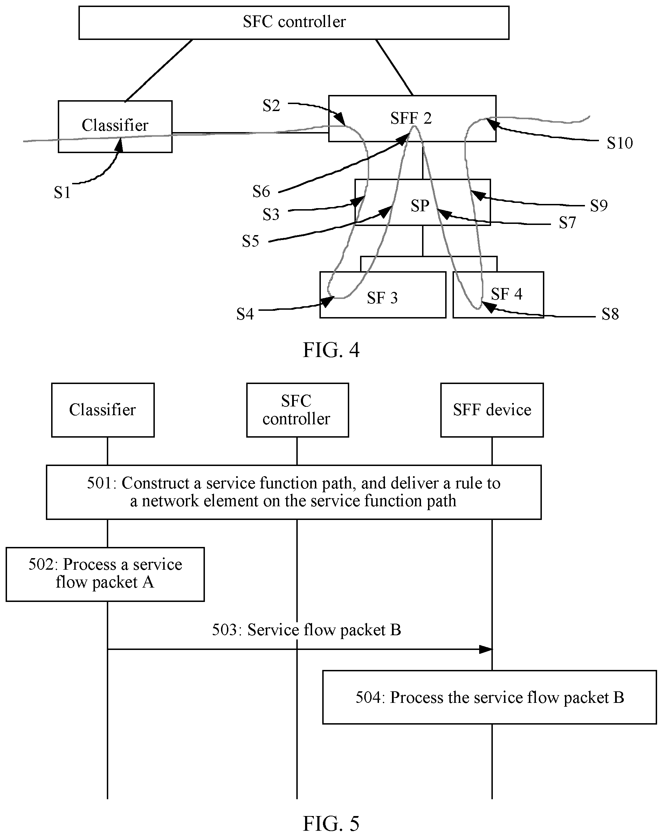

A process of processing the service flow packet A is described in detail below with reference to FIG. 4.

S1: After receiving the service flow packet A, the classifier may match the packet header feature of the service flow packet A with the match field of the rule 0 in the classifier, and if the packet header feature of the service flow packet A successfully matches the match field of the rule 0 in the classifier, the classifier adds the NSH to the service flow packet A, sets the SPI to 1 and the SI to 2 in the NSH, where the service flow packet A to which the NSH is added is denoted as the service flow packet B, and forwards the service flow packet B to the SFF.

Specifically, the rule 0 in the classifier is specifically indicated as follows:
Match: source IP=1.1.1.2, destination IP=3.1.1.2, source port=3, destination port=6; and
Action: PUSH_NSH, set_NSH_field(SPI=1, SI=2), set_MAC_field(SFF MAC), output.

To be specific, the match field of the rule 0 is that the source IP address is 1.1.1.2, the destination IP address is 3.1.1.2, the source port number is 3, the destination port number is 6, and the actions are: adding the NSH, and sending, to the SFF, the service flow packet to which the NSH is added. To be specific, when the source IP of the service flow packet received by the classifier is 1.1.1.2, the destination IP is 3.1.1.2, the source port is 3, and the destination port is 6, the classifier performs the following processing on the service flow packet: adding the NSH, setting the SPI to 1 and the SI to 2, and sending, to the SFF, the service flow packet to which the NSH is added.

S2: The SFF receives the service flow packet B, and processes the service flow packet B according to the rule 1 in the SFF.

The packet header feature of the service flow packet B is matched with the match field of the rule 1, the specific rule 1 corresponding to the SPI being 1 and the SI being 2, namely, the SI being not zero is matched, and the SFF sets the destination address of the service flow packet B to the MAC address or the IP address of the SP device, and forwards the service flow packet B to the SP device. In this embodiment, the service flow packet B processed by the SFF is denoted as the service flow packet C.

Specifically, the rule 1 in the SFF is described as follows:
Match: NSH(SPI=1, SI≠0); and
Action: set_MAC_field(SP MAC), output.

To be specific, the rule 1 includes the specific rule 1 with the match field with the SPI=1 and the SI≠0. When successful matching is achieved, the following actions are performed: setting the address of the service flow packet to the MAC address of the SP. To be specific, when the header feature of the service flow packet received by the SFF is that the SPI is 1 and the SI is not 0, the SFF sends the service flow packet to the SP.
Match: NSH(SPI=1, SI=0); and
Action: POP NSH, output.

To be specific, the rule 1 includes the specific rule 2 with the match field with the SPI=1 and the SI=0. When successful matching is achieved, the following actions are performed: removing the NSH header from the service flow packet, and sending the service flow packet to the network. To be specific, when the header feature of the service flow packet received by the SFF is that the SPI is 1 and the SI is 0, the SFF removes the NSH from the service flow packet, and sends the service flow packet to the network.

In general, the rule 1 in the SFF may include two specific rules, namely, the specific rule 1 corresponding to the SPI=1 and the SI≠0 and the specific rule 2 corresponding to the SPI=1 and the SI=0. When the packet header feature of the service flow packet successfully matches either of the specific rule 1 and the specific rule 2 included in the rule 1, it may be considered that the packet header feature of the service flow packet successfully matches the match field of the rule 1.

With reference to the foregoing example, if the packet header feature of the service flow packet B successfully matches the match field of the specific rule 1 in the rule 1, to be specific, the packet header feature of the service flow packet B successfully matches the rule 1, the action in the specific rule 1 is performed: sending the service flow packet C to the SP device.

S3: The SP device receives the service flow packet C, and processes the service flow packet C according to the rule 2 in the SP device.

Specifically, the SP device matches the packet header feature of the service flow packet C with the match field of the rule 2, creates the rule 3 and the rule 4 if the specific rule corresponding to the SPI being 1 and the SI being 2 is matched, and transfers the service flow packet C to the rule 3 or the rule 4 for processing. In this embodiment, the service flow packet C processed by the SP is denoted as a service flow packet D.

The rule 2 in the SP device is described as follows:
Match: NSH_header(SPI=1, SI=2); and
Action: create_rule(rule3), create_rule(rule4), gotorule(rule3).

To be specific, the rule 2 includes a specific rule corresponding to a match field with the SPI=1 and the SI=2. When successful matching is achieved, the following actions are performed: creating the rule 3 and rule 4, and transferring the packet to the rule 3 for processing. To be specific, when the header feature of the service flow packet received by the SP device is that the SPI is 1 and the SI is 2, the SP device creates two rules: the rule 3 and the rule 4, and transfers the received service flow packet to the rule 3 for processing.

The rule 3 created according to the rule 2 is described as follows:
Match: NSH_header(SPI=1, SI=2); and
Action: POP_NSH, set_MAC_field(Firewall MAC), output.

To be specific, the rule 3 includes a specific rule corresponding to a match field with the SPI=1 and the SI=2. When successful matching is achieved, the following actions are performed: setting an address of the service flow packet to an address of a firewall. To be specific, when the header feature of the service flow packet received by the SP device is that the SPI is 1 and the SI is 2, the SP device sends the service flow packet to the firewall.

The rule 4 created according to the rule 2 is indicated as follows:
Match: source IP=1.1.1.2, destination IP=3.1.1.2, source port=3, destination port=6; and
Action: PUSH_NSH, set_NSH_field(SPI=1, SI=1), set_MAC_field(SFF MAC), output.

It indicates that when the source IP of the service flow packet received by the SP device is 1.1.1.2, the destination IP is 3.1.1.2, the source port is 3, and the destination port is 6, the SP device performs the following actions on the received service flow packet: adding the NSH, setting the SPI to 1 and the SI to 1, and sending, to the SFF, the service flow packet to which the NSH is added.

With reference to the foregoing example, if the packet header feature of the service flow packet C successfully matches the match field of the rule 3, the SP performs the actions in the rule 3: removing the NSH from the service flow packet C, and sending, to a next hop, the service flow packet C from which the NSH is removed. The next hop of the service flow packet C from which the NSH is removed is a firewall device, and an address of the firewall device may be indicated by a MAC address or an IP address of the firewall device. In this embodiment, only an indication by the MAC address is used as an example, and the service flow packet C from which the NSH is removed is referred to as the service flow packet D.

S4: After receiving the service flow packet D, the firewall device processes the service flow packet D, and sends the processed service flow packet D to the SP device. In this embodiment, the service flow packet D processed by the firewall is referred to as a service flow packet E.

S5: After receiving the service flow packet E, the SP device may match a packet header feature of the service flow packet E with the match field of the rule 4 in the SP device, and if the packet header feature of the service flow packet E successfully matches the match field of the rule 4 in the SP device, adds the NSH to the service flow packet E, sets the SPI to 1 and the SI to 1 in the NSH, sets a destination address of the service flow packet E to the MAC address or the IP address of the SFF, and forwards the service flow packet E to the SFF. In this embodiment, the service flow packet E processed by the SP device is denoted as a service flow packet F.

S6: After receiving the service flow packet F, the SFF processes the service flow packet F according to the rule 1 in the SFF, and specifically, determines that an SI in the NSH of the service flow packet F is not zero, sets a destination address of the service flow packet F to the MAC address or the IP address of the SP device, and forwards the service flow packet F to the SP device.

S7: After receiving the service flow packet F, the SP device performs sequential matching based on priorities of rules in the SP device, to be specific, first matches with the rule 3 or the rule 4, and if the matching fails, continues to match with the rule 2.

With reference to the foregoing example, after the SP device receives the service flow packet F, because the service flow packet F is a packet with an NSH header, and an SPI=1 and an SI=1 in the NSH, matching with the rule 3 and the rule 4 fails. The SP device continues to match with another rule in the SP device, for example, the rule 2, and if the matching succeeds, creates two higher-priority rules: a rule 5 and a rule 6 according to the rule 2, and transfers the service flow packet F to the rule 5 for processing.

A match field of the rule 5 is an NSH, and actions in the rule 5 are: removing the NSH, and sending the received service flow packet to a next hop. The next hop of the received service flow packet is an SF device, and an address of the SF device may be indicated by a MAC address of the SF device, or may be indicated by an IP address of the SF device. This is not limited in this embodiment of this application. A match field of the rule 6 is a protocol layer header feature, and actions in the rule 6 are: adding an NSH header, and sending the received service flow packet to a next hop. The next hop of the received service flow packet is an SFF, and may be indicated by a MAC address of the SFF, or may be indicated by an IP address of the SFF. This is not limited in this embodiment of this application.

It should be noted that, the rule 2 in this embodiment is a type of rules, includes a plurality of specific rules, and may further include the following rule in addition to the specific rule described in S3:
Match: NSH_header (SPI=1, SI=1); and
Action: create_rule(rule5), create_rule(rule6), gotorule(rule5).

To be specific, the rule 1 may further include a specific rule 3 corresponding to a match field with an SPI=1 and an SI=1. When successful matching is achieved, the following actions are performed: creating the rule 5 and the rule 6, and transferring the service flow packet to the rule 5 for processing. To be specific, when the SPI is 1 and the SI is 1 in the service flow packet received by the SFF, the SFF creates the two higher-priority rules: the rule 5 and the rule 6, and transfers the service flow packet to the rule 5 for processing.

In general, the rule 2 may include the following specific rules: the specific rule 1 corresponding to the SPI=1 and the SI=2, the specific rule 2 corresponding to the SPI=1 and the SI=0, and the specific rule 3 corresponding to the SPI=1 and the SI=1. When the packet header feature of the service flow packet successfully matches any one of the specific rule 1 to the specific rule 3 included in the rule 2, it may be considered that the packet header feature of the service flow packet successfully matches the match field of the rule 2.

The rule 5 is described as follows:
Match: NSH_header(SPI=1, SI=1); and
Action: POP_NSH, set_MAC_field(LB MAC), output.

It indicates that when the SPI is 1 and the SI is 1 in the service flow packet received by the SFF, the SFF performs the following processing on the service flow packet: removing the NSH header, and sending, to the LB device, the service flow packet from which the NSH header is removed.

The rule 6 created according to the rule 2 is described as follows:
Match: source IP=1.1.1.2, destination IP=3.1.1.2, source port=3, destination port=6; and
Action: PUSH_NSH, set_NSH_field(SPI=1, SI=0), set_MAC_field(SFF MAC), output.

It indicates that when the source IP of the service flow packet received by the SP device is 1.1.1.2, the destination IP is 3.1.1.2, the source port is 3, and the destination port is 6, the SP device performs the following actions on the received service flow packet: adding the NSH, setting the SPI to 1 and the SI to 0, and sending, to the SFF, the service flow packet to which the NSH is added.

In this embodiment, after receiving the service flow packet F, the SP device sequentially matches with rules in the SP device based on rule priorities. If the rule 2 is successfully matched, the actions in the rule 2 are performed: creating the two higher-priority rules: the rule 5 and the rule 6, and transferring the service flow packet F to the rule 5. An NSH header feature of the service flow packet F is matched with the match field of the rule 5, and if the NSH header feature of the service flow packet F successfully matches the match field of the rule 5, the actions in the rule 5 are performed: removing the NSH from the service flow packet E, and sending, to the LB device, the service flow packet E from which the NSH is removed. In this embodiment of this application, the service flow packet F from which the NSH is removed is referred to as a service flow packet G.

S8: After receiving the service flow packet G, the LB device processes the service flow packet G, and forwards the processed service flow packet G to the SP device. The processed service flow packet G is denoted as a service flow packet H.

S9: After receiving the service flow packet H, the SP device performs sequential matching based on priorities of rules in the SP device. With reference to the foregoing example, if a packet header feature of the service flow packet H successfully matches the match field of the rule 6, the actions in the rule 6 are performed: adding the NSH, setting the SPI to 1 and the SI to 0, and sending, to the SFF, the service flow packet to which the NSH is added. The address of the SFF may be indicated by the MAC address or the IP address of the SFF, and the service flow packet H to which the NSH is added is denoted as a service flow packet I.

S10: After receiving the service flow packet I, the SFF processes the service flow packet I according to the rule 1 in the SFF. In this case, the SI is zero, to be specific, the end position of the service function path is reached, the SFF performs the actions in the specific rule 2 included in the rule 1: removing an NSH from the service flow packet I, and forwarding, to the network, the service flow packet I from which the NSH is removed.

FIG. 5 is a schematic flowchart of a packet processing method according to an embodiment of this application when a forwarding device is an SFF. To be specific, in this embodiment, the SFF has a capability of creating a rule. As shown in FIG. 5, the method includes the following content.

501: An SFC controller constructs a service function chain SFC, and sends a corresponding rule to a network element on the service function path.

Specifically, for a classifier, the rule delivered by the SFC controller in 501 is a rule 1, and a match field of the rule 1 is a protocol layer header feature.

502: The classifier processes a service flow packet A according to the rule 1 in the classifier.

Specifically, the classifier may match a packet header feature of the received service flow packet A with the match field of the rule 1, and if the packet header feature of the service flow packet A successfully matches the match field of the rule 1, the classifier performs actions in the rule 1: adding an NSH to the service flow packet A, setting an SPI and an SI in the NSH, and sending, to the SFF, the service flow packet A to which the NSH is added. In this embodiment, the service flow packet A to which the NSH is added is denoted as a service flow packet B.

503: Forward the service flow packet B to the SFF.

504: The SFF receives the service flow packet B, and processes the service flow packet B.

For the SFF, the rule delivered by the SFC controller in 501 is a rule 2, and a match field of the rule 2 is an NSH. When receiving the service flow packet B, the SFF matches a packet header feature of the service flow packet B with the match field of the rule 2, and if a matched SI is zero, removes the NSH from the service flow packet B and forwards, to a network, the service flow packet B from which the NSH is removed; or if a matched SI is not zero, creates a rule 3 and a rule 4, and processes the service flow packet B according to the rule 3 or the rule 4. Priorities of the rule 3 and rule 4 are higher than a priority of the rule 2. A match field of the rule 3 is an NSH, and if successful matching is achieved, actions in the rule 3 are: removing the NSH, setting a destination address of the service flow packet to a MAC address or an IP address of the SF, and forwarding the service flow packet to the SF. A match field of the rule 4 is a protocol layer header feature, and if successful matching is achieved, actions in the rule 4 are: adding the NSH to the service flow packet, changing an SPI and an SI in the NSH, and processing, according to the fourth rule, the service flow packet to which the NSH has already been added. For brevity, details are not described herein again.

A process of processing the service flow packet is described below with reference to a specific example. A service function path of the service flow packet A is: firewall->LB, to be specific, from a firewall device to a load balance device. An SPI of the service function path is 1, a service index SI is 2, an L3 feature of the service flow packet A is that a source IP is 1.1.1.2, a destination IP is 3.1.1.2, a source port number is 3, a destination port number is 6, and the service flow packet is an L3 packet.

In this example, the SFF device may be the SFF device 1 in the network architecture shown in FIG. 1, and the firewall device and the load balance device each may be the SF 1 or the SF 2 in the network architecture shown in FIG. 1. An example in which the SF 1 is the firewall device and the SF 2 is the load balance device is used for description.

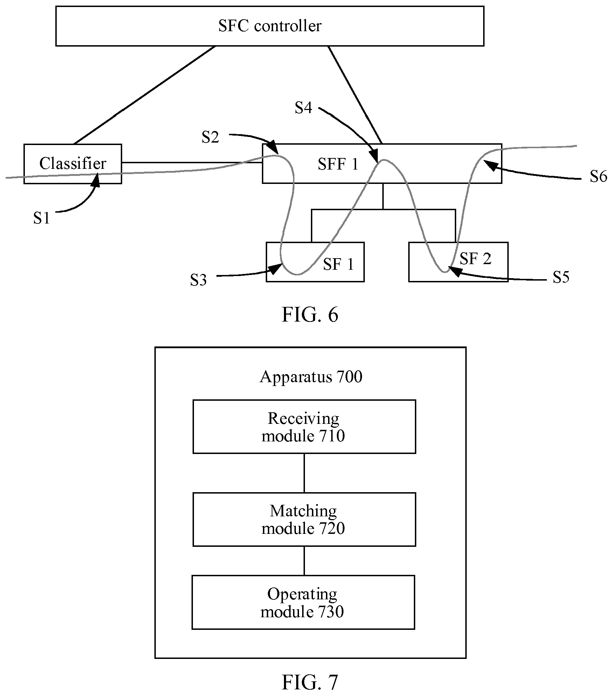

A process of processing the service flow packet A is described in detail below with reference to FIG. 6.

S1: After receiving the service flow packet A, the classifier may match the packet header feature of the service flow packet A with the match field of the rule 1, and if the packet header feature of the service flow packet A successfully matches the match field of the rule 1, the classifier adds the NSH to the service flow packet A, sets the SPI to 1 and the SI to 2 in the NSH, where the service flow packet A to which the NSH is added is denoted as the service flow packet B, sets a destination address of the service flow packet B to the MAC address or the IP address of the SFF, and forwards the service flow packet B to the SFF.

Specifically, the rule 1 is described as follows:
Match: source IP=1.1.1.2, destination IP=3.1.1.2, source port=3, destination port=6; and
Action: PUSH_NSH, set_NSH_field(SPI=1, SI=2), set_MAC_field(SFF MAC), output.

It indicates when the source IP of the service flow packet received by the classifier is 1.1.1.2, the destination IP is 3.1.1.2, the source port is 3, and the destination port is 6, the classifier performs the following processing on the service flow packet: adding the NSH, setting the SPI to 1 and the SI to 2, and sending, to the SFF, the service flow packet to which the NSH is added.

S2: The SFF processes the service flow packet B according to the rule 2, and specifically, matches the packet header feature of the service flow packet B with the match field of the rule 2, and when a matched SPI is 1 and a matched SI is 2, the SFF creates the two higher-priority rules: the rule 3 and the rule 4, and transfers the service flow packet B to the rule 3 for processing.

The match field of the rule 3 is the NSH and includes the SP and the SI, and the actions in the rule 3 are: removing, by the SFF, the NSH from the service flow packet, and sending, to the SF, the service flow packet from which the NSH is removed. The match field of the rule 4 is the protocol layer header feature, and the actions in the rule 4 are: adding, by the SFF, the NSH to the service flow packet, setting the SPI and the SI, and pushing, to the rule 2, the service flow packet to which the NSH is added, for processing.

With reference to the foregoing example, the rule 2 is described as follows:
Match: NSH(SPI=1, SI=2);
Action: create_rule(rule3), create_rule(rule4), gotorule(rule3).

It indicates that when the header feature of the service flow packet received by the SFF is that the SPI is 1 and the SI is 2, the SFF creates two higher-priority rules, and transfers the service flow packet to the rule 3 for processing. The rule 3 is described as follows:
Match: NSH(SPI=1, SI=0); and
Action: POP NSH, output.

It indicates that when the header feature of the service flow packet received by the SFF is that the SPI is 1 and the SI is 0, the SFF removes the NSH from the service flow packet, and sends the service flow packet to the network.

The high-priority rule 3 created according to the rule 2 is described as follows:
Match: NSH_header(SPI=1, SI=2); and
Action: POP_NSH, set_MAC_field(Firewall MAC), output.

It indicates that when the header feature of the service flow packet received by the SP device is that the SPI is 1 and the SI is 2, the SP device sends the service flow packet to the firewall device.

The high-priority rule 4 created according to the rule 2 is described as follows:
Match: source IP=1.1.1.2, destination IP=3.1.1.2, source port=3, destination port=6; and
Action: PUSH_NSH, set_NSH_field(SPI=1, SI=1), gotorule(rule2).

It indicates that when the source IP of the service flow packet received by the SP device is 1.1.1.2, the destination IP is 3.1.1.2, the source port is 3, and the destination port is 6, the SP device performs the following actions on the received service flow packet: adding the NSH, setting the SPI to 1 and the SI to 1, and transferring, to the rule 2, the service flow packet to which the NSH is added.

With reference to the foregoing example, if the packet header feature of the service flow packet B successfully matches the match field of the rule 3, the actions in the rule 3 are performed. The service flow packet B processed by the SFF is denoted as a service flow packet C, and the service flow packet C is sent to the firewall device.

S3: After receiving the service flow packet C, the firewall device processes the service flow packet C, and sends the processed service flow packet C to the SFF.

S4: After receiving the service flow packet C processed by the firewall device, the SFF performs sequential matching based on priorities of rules in the SFF, until a rule is matched, and performs a corresponding action.

With reference to the foregoing example, the service flow packet C is an L3 packet, a packet header feature of the service flow packet C is matched with the match field of the rule 4, and if the packet header feature of the service flow packet C successfully matches the match field of the rule 4, the actions in the rule 4 are performed: adding an NSH to the service flow packet C, and setting an SPI to 1 and an SI to 1 in the NSH. The service flow packet C to which the NSH is added is denoted as a service flow packet D, and then the service flow packet D is processed according to the rule 2.

It should be noted that, the rule 2 in this embodiment is a type of rules, and may further include the following rule in addition to the specific rule shown in S2:
Match: NSH(SPI=1, SI=1); and
Action: create_rule(rule5), create_rule(rule6), gotorule(rule5).

It indicates that when the header feature of the service flow packet received by the SFFis that the SPI is 1 and the SI is 1, the SFF creates two higher-priority rules: a rule 5 and a rule 6, and transfers the service flow packet to the rule 5 for processing.

To be specific, the rule 2 may include the following specific rules: a specific rule 1 corresponding to an SPI=1 and an SI=2, a specific rule 2 corresponding to an SPI=1 and an SI=0, and a specific rule 3 corresponding to an SPI=1 and an SI=1. When the packet header feature of the service flow packet successfully matches any one of the specific rule 1 to the specific rule 3 included in the rule 2, it may be considered that the packet header feature of the service flow packet successfully matches the match field of the rule 2.

The high-priority rule 5 created according to the rule 2 is described as follows:
Match: NSH_header(SPI=1, SI=1); and
Action: POP_NSH, set_MAC_field(LB MAC), output.

It indicates that when the header feature of the service flow packet received by the SFF is that the SPI is 1 and the SI is 1, the SFF performs the following actions: removing the NSH header, and sending the service flow packet to the LB device.

The high-priority rule 6 created according to the rule 2 is described as follows:
Match: source IP=1.1.1.2, destination IP=3.1.1.2, source port=3, destination port=6; and
Action: PUSH_NSH, set_NSH_field(SPI=1, SI=0), gotorule(rule2).

It indicates that when the source IP of the service flow packet received by the SFF is 1.1.1.2, the destination IP is 3.1.1.2, the source port is 3, and the destination port is 6, the SFF performs the following actions on the received service flow packet: adding the NSH, setting the SPI to 1 and the SI to 0, and transferring, to the rule 2, the service flow packet to which the NSH is added.

With reference to the foregoing example, if a packet header feature of the service flow packet D successfully matches a match field of the rule 5, the action in the rule 5 is performed: removing an NSH from the service flow packet D. The service flow packet from which the NSH is removed is referred to as a service flow packet E, and the service flow packet E is sent to the LB device.

S5: After receiving the service flow packet E, the LB device processes the service flow packet E, and forwards the processed service flow packet E to the SFF.

S6: After receiving the service flow packet E processed by the LB device, the SFF performs sequential matching based on priorities of rules in the SFF, until a rule is matched, and performs a corresponding action.

It should be noted that, priorities of the rule 3, the rule 4, the rule 5, and the rule 6 in the SFF are the same, and are all higher than the priority of the rule 2.

A packet header feature of the service flow packet E is an L3 feature, and if the packet header feature of the service flow packet E successfully matches a match field of the rule 6, the SFF performs actions in the rule 6: adding an NSH to the service flow packet E, setting an SPI to 1 and an SI to 0, and transferring, to the rule 2, the service flow packet to which the NSH is added. In this embodiment, the service flow packet E to which the NSH is added is referred to as a service flow packet F.

In this case, an SI in the service flow packet F is 0, and the specific rule 2 corresponding to the SPI=1 and the SI being 0 in the rule 2 is matched, to be specific, an end position of the service function path is reached. The SFF removes the NSH from the service flow packet F, and forwards, to the network, the service flow packet F from which the NSH is removed. So far, the process of processing the service flow packet A ends.

Therefore, according to the packet processing method in this embodiment of this application, the forwarding device may generate the second rule and the third rule with higher priorities according to the first rule delivered by the SFC controller, to process the service flow packet from the classifier, the SFF, or the SF device according to the second rule and the third rule. Therefore, the forwarding device does not need to obtain, by reporting to the SFC controller, a rule for restoring the NSH, thereby helping reduce control signaling overheads. On the other hand, it also helps avoid a waste of storage space caused when a large quantity of forwarding rules are stored in the forwarding device.

The method embodiment of this application is described in detail above with reference to FIG. 2 to FIG. 6. An apparatus embodiment of this application is described below with reference to FIG. 7 to FIG. 9. It should be understood that, the apparatus embodiment corresponds to the method embodiment, and for similar descriptions, refer to the method embodiment.

FIG. 7 is a schematic block diagram of a packet processing apparatus according to an embodiment of this application. An example of an apparatus 700 in FIG. 7 is a forwarding device, for example, an SFF or an SP. The apparatus 700 includes a receiving module 710, a matching module 720, and an operating module 730.

The receiving module 710 is configured to receive a first rule from a service function chain controller, where the first rule includes a match field, and the match field is a network service header NSH.

The receiving module 710 is further configured to receive a first service flow packet.

The matching module 720 is configured to match a packet header feature of the first service flow packet with the match field of the first rule.

The operating module 730 is configured to: if the packet header feature of the first service flow packet successfully matches the match field of the first rule, create a second rule and a third rule according to the first rule, where priorities of the second rule and the third rule are higher than a priority of the first rule.

Optionally, in some embodiments, the match field of the first rule further includes a protocol layer header feature.

Optionally, in some embodiments, a match field of the second rule is an NSH, and the receiving module 710 is further configured to:
receive a second service flow packet from a service function forwarder SFF or a classifier;
the matching module 720 is further configured to:
   match a packet header feature of the second service flow packet with the match field of the second rule, where the packet header feature of the second service flow packet includes an NSH; and
   the operating module 730 is further configured to: if the packet header feature of the second service flow packet successfully matches the match field of the second rule, perform actions in the second rule: removing the NSH from the second service flow packet, and forwarding a processed second service flow packet to a service function SF device.

Optionally, in some embodiments, the match field of the second rule further includes a protocol layer header feature.

Optionally, in some embodiments, a match field of the third rule is a protocol layer header feature, and the receiving module 710 is further configured to:
receive a third service flow packet from the SF device;
the matching module 720 is further configured to:
   match a packet header feature of the third service flow packet with the match field of the third rule; and
   the operating module 730 is further configured to:
      if the packet header feature of the third service flow packet successfully matches the match field of the third rule, perform an action in the third rule: adding an NSH to the third service flow packet.

Optionally, in some embodiments, the forwarding device is the SFF, and the operating module is further configured to:
process the third service flow packet to which the NSH has already been added.

Optionally, in some embodiments, the forwarding device is an SP device, and the apparatus further includes:
a sending module, configured to forward, to the SFF, the third service flow packet to which the NSH has already been added.

Optionally, in some embodiments, the first service flow packet, the second service flow packet, and the third service flow packet belong to a same service flow.

Specifically, the apparatus 700 may correspond to the forwarding device in the packet processing method 200 according to the embodiments of this application, or the SP device in the method shown in FIG. 3, or the SFF in the method shown in FIG. 5. The apparatus 700 may include physical units configured to perform the method performed by the forwarding device in the method 200 in FIG. 2, or performed by the SP device in FIG. 3 or the SFF in FIG. 5. In addition, the foregoing and other operations and/or functions of the physical units in the apparatus 700 are respectively for implementing corresponding procedures of the forwarding device in the method 200 in FIG. 2, or the SP device in FIG. 3 or the SFF in FIG. 5. For brevity, details are not described herein again.

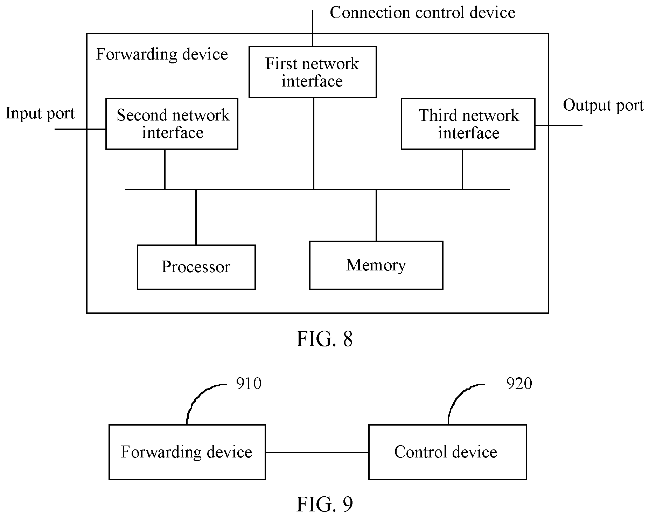

As shown in FIG. 8, an embodiment of this application provides a hardware implementation of a data packet processing apparatus. The apparatus may be a forwarding device, for example, may be an SFF or an SP device.

The apparatus includes a processor, a memory, a first network interface, a second network interface, and a third network interface. The first network interface, the second network interface, the third network interface, the processor, and the memory communicate with and are connected to each other. The first network interface may be connected to and interact with a control device. For example, the control device may be an SFC controller. The second network interface is used as an input port of the apparatus, and may be configured to receive a service flow packet. The third network interface is used as an output port of the apparatus, and may be configured to send a service flow packet processed by the processor. For example, each network interface may include a plurality of input and output ports. The first, second, and third network interfaces may be independent network interfaces or may be combined into a network interface. The memory may be a semi-conductor storage unit, and may be directly accessed by the processor.

The memory is configured to store program code executable by a computer, where the program code is used to perform the packet processing method shown in FIG. 2, FIG. 3, or FIG. 5, and is configured to store a flow entry provided in the embodiments of this application. The processor is configured to perform, based on the program code stored in the memory and executable by the computer, the packet processing method shown in FIG. 2, FIG. 3, or FIG. 5, to process a received service flow packet.

Another embodiment of this application further provides a packet processing system. As shown in FIG. 9, the system includes a forwarding device 910 and a control device 920.

Optionally, the packet processing system may further include a classifier. For example, the forwarding device 910 may be the apparatus 700 shown in FIG. 7. The control device 920 may be the SFC controller shown in FIG. 1, or may be the SFC controller in the method 200 shown in FIG. 2, FIG. 3, or FIG. 5.

An embodiment of this application further provides a computer-readable medium. The computer-readable medium stores program code to be executed by a computer, and the program code is used to perform the data packet processing method shown in FIG. 2, FIG. 3, or FIG. 5.

An embodiment of this application further provides a computer program product. The computer program product includes program code executable by a computer, and the program code is used to perform the data packet processing method shown in FIG. 2, FIG. 3, or FIG. 5.

It should be understood that, the term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

It should be understood that sequence numbers of the foregoing processes do not mean execution sequences in various embodiments of this application. The execution sequences of the processes should be determined according to functions and internal logic of the processes, and should not be construed as any limitation on the implementation processes of the embodiments of this application.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, the unit division is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, functional units in the embodiments of this application may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the prior art, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in the embodiments of this application. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A packet processing method, comprising:
receiving, by a forwarding device, a first rule from a service function chain controller, wherein the first rule comprises a match field, and the match field is a network service header NSH;
receiving, by the forwarding device, a first service flow packet, and matching a packet header feature of the first service flow packet with the match field of the first rule; and
if the packet header feature of the first service flow packet successfully matches the match field of the first rule, creating, by the forwarding device, a second rule and a third rule according to the first rule, wherein priorities of the second rule and the third rule are higher than a priority of the first rule.

2. The method according to claim 1, wherein the match field of the first rule further comprises a protocol layer header feature.

3. The method according to claim 1 or 2, wherein a match field of the second rule is an NSH, and the method further comprises:
receiving, by the forwarding device, a second service flow packet from a service function forwarder SFF or a classifier;
matching a packet header feature of the second service flow packet with the match field of the second rule, wherein the packet header feature of the second service flow packet comprises an NSH; and
if the packet header feature of the second service flow packet successfully matches the match field of the second rule, performing actions in the second rule: removing the NSH from the second service flow packet, and forwarding a processed second service flow packet to a service function SF device.

4. The method according to claim 3, wherein the match field of the second rule further comprises a protocol layer header feature.

5. The method according to any one of claims 1 to 4, wherein a match field of the third rule is a protocol layer header feature, and the method further comprises:
receiving, by the forwarding device, a third service flow packet from the SF device;
matching a packet header feature of the third service flow packet with the match field of the third rule; and
if the packet header feature of the third service flow packet successfully matches the match field of the third rule, performing an action in the third rule: adding an NSH to the third service flow packet.

6. The method according to claim 5, wherein the forwarding device is the SFF, and the method further comprises:
processing the third service flow packet to which the NSH has already been added.

7. The method according to claim 5, wherein the forwarding device is an SP device, and the method further comprises:
forwarding, to the SFF, the third service flow packet to which the NSH has already been added.

8. The method according to any one of claims 5 to 7, wherein the first service flow packet, the second service flow packet, and the third service flow packet belong to a same service flow.

9. A packet processing apparatus, comprising:
a receiving module, configured to receive a first rule from a service function chain controller, wherein the first rule comprises a match field, and the match field is a network service header NSH, wherein
the receiving module is further configured to receive a first service flow packet;
a matching module, configured to match a packet header feature of the first service flow packet with the match field of the first rule; and
an operating module, configured to: if the packet header feature of the first service flow packet successfully matches the match field of the first rule, create a second rule and a third rule according to the first rule, wherein priorities of the second rule and the third rule are higher than a priority of the first rule.

10. The apparatus according to claim 9, wherein the match field of the first rule further comprises a protocol layer header feature.

11. The apparatus according to claim 9 or 10, wherein a match field of the second rule is an NSH, and the receiving module is further configured to:
receive a second service flow packet from a service function forwarder SFF or a classifier;
the matching module is further configured to:
match a packet header feature of the second service flow packet with the match field of the second rule, wherein the packet header feature of the second service flow packet comprises an NSH; and
the operating module is further configured to:
if the packet header feature of the second service flow packet successfully matches the match field of the second rule, perform actions in the second rule: removing the NSH from the second service flow packet, and forwarding a processed second service flow packet to a service function SF device.

12. The apparatus according to claim 11, wherein the match field of the second rule further comprises a protocol layer header feature.

13. The apparatus according to any one of claims 9 to 12, wherein a match field of the third rule is a protocol layer header feature, and the receiving module is further configured to:
receive a third service flow packet from the SF device;
the matching module is further configured to:
match a packet header feature of the third service flow packet with the match field of the third rule; and
the operating module is further configured to:
if the packet header feature of the third service flow packet successfully matches the match field of the third rule, perform an action in the third rule: adding an NSH to the third service flow packet.

14. The apparatus according to claim 13, wherein the forwarding device is the SFF, and the operating module is further configured to:
process the third service flow packet to which the NSH has already been added.

15. The apparatus according to claim 13, wherein the forwarding device is an SP device, and the apparatus further comprises:
a sending module, configured to forward, to the SFF, the third service flow packet to which the NSH has already been added.

16. The apparatus according to any one of claims 13 to 15, wherein the first service flow packet, the second service flow packet, and the third service flow packet belong to a same service flow.

17. A computer-readable storage medium, comprising an instruction, wherein when the instruction is run on a computer, the computer is enabled to perform the method according to any one of claims 1 to 8.

18. A computer program product comprising an instruction, wherein when the computer program product is run on a computer, the computer is enabled to perform the method according to any one of claims 1 to 8.
